# EUROPEAN PATENT SPECIFICATION

(11) **EP 2 571 270 B1**
(45) Date of publication and mention of the grant of the patent: **14.09.2016**
(21) Application number: 12153992.8
(22) Date of filing: 06.02.2012
(51) Int. Cl.: H04N 19/56, H04N 19/513, H04N 5/232

(54) **Method for assisting video compression by using touch screen and monitoring system**
Verfahren zur Unterstützung der Videokomprimierung durch Verwenden eines Berührungsbildschirms und eines Überwachungssystems
Procédé d'aide à la compression vidéo par l'utilisant d'un écran tactile et d'un système de surveillance

(30) Priority: 19.09.2011 TW 100133660
(43) Date of publication of application: 20.03.2013
(73) Proprietor: Acer Incorporated, New Taipei City 221 (TW)
(72) Inventor: Huang, Shih-Chia, 221 New Taipei City (TW); Chen, Bo-Hao, 221 New Taipei City (TW); Kuo, Sy-Yen, 221 New Taipei City (TW)
(74) Representative: Chamberlain, Alan James

(56) References cited:
- EP-A2- 1 821 522
- WO-A2-2007/109425
- US-A- 4 720 805
- US-A1- 2009 262 230
- GERARD DE HAAN ET AL: "An Efficient True-Motion Estimator Using Candidate Vectors from a Parametric Motion Model", IEEE TRANSACTIONS ON CIRCUITS AND SYSTEMS FOR VIDEO TECHNOLOGY, IEEE SERVICE CENTER, PISCATAWAY, NJ, US, vol. 8, no. 1, 1 February 1998 (1998-02-01), XP011014442, ISSN: 1051-8215
- ADITYA MAVLANKAR ET AL: "Region-of-interest prediction for interactively streaming regions of high resolution video", PACKET VIDEO 2007, IEEE, PI, 1 November 2007 (2007-11-01), pages 68-77, XP031170600, ISBN: 978-1-4244-0980-8

## Description

### BACKGROUND OF THE INVENTION

### Field of the Invention

The invention relates to a video compression method and system. Particularly, the invention relates to a method for assisting video compression by using a touch screen and a monitoring system.

### Description of Related Art

A conventional monitoring system generally uses a fixed video camera to capture video images of a specific area, and displays the video images on a host screen for viewing, so as to achieve a monitoring effect. The monitoring video camera can also be mounted on mobile equipment, and a shooting angle or a shooting position thereof can be changed by controlling the mobile equipment, so as to increase a monitoring range.

With development of network transmission techniques, the video images captured by the monitoring video camera can be sent to a remote host through a network, so that a user at the remote end can monitor video images of different areas. As a resolution of the video camera increases, data amount of the video images captured by the video camera is also greatly increased. Therefore, before the video images are transmitted, they are first compressed, and then transmitted through a limited network bandwidth.

Compression of the video images is absolutely related to a variation of each of the images, and a motion estimator is generally used to estimate a motion vector of each of the images, and image data is compressed by using the motion vector. Since a fixed video camera has a fixed shooting range, the captured images thereof are not dramatically varied, and computation of motion estimation does not consume too much system resources.

However, once the shooting angle or the shooting position of the video camera changes, variations of the images captured by the monitoring video camera are greatly increased, and the motion estimator has to spend more time and resources to estimate the motion vectors, so that the system performance is decreased.

US 2009/262230 describes an image pickup apparatus and a method for controlling ranging area.

WO 2007/109425 describes a method for digital video/audio recording with backlight compensation using a touch screen control panel.

EP 1821522 describes a method of compensating an imager-created image for a distortion.

### SUMMARY OF THE INVENTION

Accordingly, the invention is directed to a method for assisting video compression by using a touch screen and a monitoring system, by which a motion vector of a touch operation on the touch screen is detected to serve as a motion vector of motion estimation of a monitored frame, so as to reduce resources and time required by motion estimation computation.

The invention provides a method for assisting video compression by using a touch screen, which is adapted to a monitoring system including the touch screen and at least one image capturing apparatus. In the method, each of the image capturing apparatuses is used to capture a reference frame. Then, a touch operation performed on the touch screen is detected and a motion vector of the touch operation is computed. According to the motion vector, the image capturing apparatus is moved to capture a current frame. The reference frame is divided into a plurality of reference blocks, and a current block in the current frame that corresponds to each of the reference blocks is searched according to the computed motion vector. Finally, a difference between specific pixels in each of the reference blocks and the corresponding current blocks is computed; the computed difference is compared to a threshold to determine whether to use the motion vector of the touch operation as a motion vector between the reference block and the current block, and when the computed difference is smaller than the threshold value, the determined motion vector of the touch operation is directly used as the motion vector between the reference block and the current block to compress frame data of the reference block and the current block.

In an embodiment of the invention, the step of computing the difference includes following steps. A sum of differences of luminance values of a plurality of corresponding pixels in each of the reference blocks and the corresponding current blocks is computed. When the sum of the difference is not smaller than the threshold, a motion estimation is performed on the reference block and the current block, and a motion vector obtained through the motion estimation is used to compress the frame data of the reference block and the current block.

In an embodiment of the invention, the step of computing the sum of the differences of the luminance values of the corresponding pixels in each of the reference blocks and the corresponding current block includes obtaining luminance values of pixels at four corners of each of the reference blocks and luminance values of pixels at corresponding corners of the corresponding current block, so as to compute the sum of the differences of luminance values.

In an embodiment of the invention, the step of detecting the touch operation performed on the touch screen and computing the motion vector of the touch operation includes computing an average of motion vectors of a plurality of touch points of the touch operation to serve as the motion vector of the touch operation.

In an embodiment of the invention, the step of moving the image capturing apparatus according to the motion vector to capture the current frame includes computing a ratio between a resolution of the touch screen and a resolution of the image capturing apparatus, and converting the motion vector of the touch screen into a motion amount of the image capturing apparatus according to the ratio.

In an embodiment of the invention, the step of dividing the reference frame into a plurality of reference blocks includes determining a size of the divided reference block and the current block according to a resolution of the image capturing apparatus.

The invention provides a monitoring system including at least one image capturing apparatus, a touch screen and a control unit. The image capturing apparatus captures frames. The touch screen detects a touch operation. The control unit is coupled to the image capturing apparatus and the touch screen, and is used for computing a motion vector of the touch operation to move the image capturing apparatus to capture a reference frame and a current frame. The control unit is arranged to divide the reference frame into a plurality of reference blocks, to search a current block in the current frame that corresponds to each of the reference blocks according to the computed motion vector, compute a difference between specific pixels in each of the reference blocks and the corresponding current block, compare the computed difference to a threshold to determine whether to use the motion vector of the touch operation as a motion vector between the reference block and the current block, and, when the control unit determines that the computed difference is smaller than the threshold, directly use the determined motion vector of the touch operation as the motion vector between the reference block and the current block and use the motion vector of the touch operation to compress frame data of the reference block and the current block.

In an embodiment of the invention, the computed difference is a sum of differences of luminance values of a plurality of corresponding pixels in each of the reference blocks and the corresponding current block.

In an embodiment of the invention, the monitoring system further includes a motion estimator arranged to perform a motion estimation on the reference block and the current block when the control unit determines that the sum of the differences is not smaller than the threshold, and provide a motion vector obtained through the motion estimation to the control unit, wherein the control unit is arranged to use the motion vector obtained through the motion estimation to compress the frame data of the reference block and the current block.

In an embodiment of the invention, the control unit is arranged to obtain luminance values of pixels at four corners of each of the reference blocks and luminance values of pixels at corresponding corners of the corresponding current block to compute the sum of the differences of luminance values.

In an embodiment of the invention, the control unit is arranged to compute an average of motion vectors of a plurality of touch points of the touch operation to serve as the motion vector of the touch operation.

In an embodiment of the invention, the control unit is arranged to compute a ratio between a resolution of the touch screen and a resolution of the image capturing apparatus, and converts the motion vector of the touch screen into a motion amount of the image capturing apparatus according to the ratio.

In an embodiment of the invention, the control unit is arranged to determine a size of the divided reference block and the current block according to a resolution of the image capturing apparatus.

According to the above descriptions, in the method for assisting video compression by using the touch screen and the monitoring system, by performing a touch operation on the touch screen, the monitoring video camera is controlled to capture video frames. By directly using the motion vector of the touch operation as the motion vector of the motion estimation between the video frames, a computing time of the motion estimation is reduced.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block diagram of a monitoring system according to an embodiment of the invention.
FIG. 2 is a flowchart illustrating a method for assisting video compression by using a touch screen according to an embodiment of the invention.
FIG. 3 is a flowchart illustrating a method for assisting video compression by using a touch screen according to an embodiment of the invention.
FIG. 4 is an example for computing a difference between a reference block and a corresponding current block according to an embodiment of the invention.

### DETAILED DESCRIPTION OF DISCLOSED EMBODIMENTS

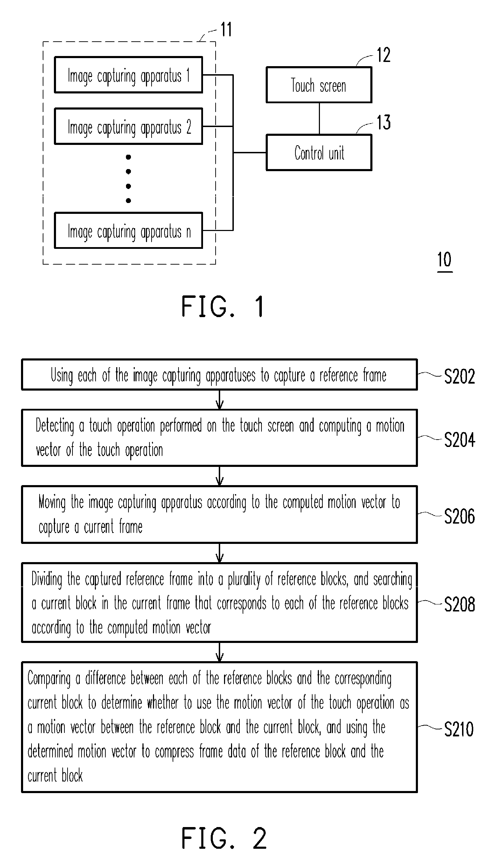

FIG. 1 is a block diagram of a monitoring system according to an embodiment of the invention. Referring to FIG. 1, the monitoring system 10 of the present embodiment includes at least one image capturing apparatus 11 (for example, an image capturing apparatus 1, an image capturing apparatus 2, ..., an image capturing apparatus n, where n is a positive integer), a touch screen 12 and a control unit 13, and functions thereof are respectively described blow.

The image capturing apparatus 11 is, for example, an apparatus including a prime lens or a zoom lens, and a photosensing device such as a charge coupled device (CCD) or a complementary metal-oxide semiconductor (CMOS).

The touch screen 12 is, for example, composed of a liquid crystal display (LCD), a light-emitting diode (LED) display or a field emission display (FED) and a resistive or a capacitive touch panel, which can simultaneously provide a display function and touch control function.

The control unit 13 is coupled to the image capturing unit 11 and the touch screen 12, which is, for example, a central processing unit (CPU), a microprocessor, a digital signal processor (DSP), a programmable controller, an application specific integrated circuit (ASIC), a programmable logic device (PLD) or other similar devices, and is used for managing operations of the monitoring system 10.

In detail, FIG. 2 is a flowchart illustrating a method for assisting video compression by using a touch screen according to an embodiment of the invention. Referring to FIG. 2, the method of the present embodiment is adapted to the monitoring system 10 of FIG. 1, and details steps of the method for assisting video compression are described below with reference of various devices of the monitoring system 10.

First, the control unit 13 controls each of the image capturing apparatuses 11 to capture a reference frame (step S202). The reference frame is a frame captured by the image capturing apparatus 11 before it is moved under control of the control unit 13, or a frame captured after a previous movement, which serves as a reference frame in motion estimation of a next frame.

Then, the control unit 13 detects a touch operation performed on the touch screen 12 and computes a motion vector of the touch operation (step S204). In detail, each time when the user performs a touch operation on the touch screen 12, the touch screen 12 detects positions of touch points touched by the user's finger, and transmits position information of the touch points to the control unit 13. The control unit 13 computes a motion vector of the touch operation on the touch screen 12. It should be noticed that when the above detection method is applied to a touch screen supporting a multi-touch function, a gesture of the user can be determined to control various image capturing apparatuses 11 to execute a motion, for example, rotation or movement corresponding to the gesture.

In detail, when the control unit 13 detects a plurality of touch points, it may compute an average of motion vectors of the touch points to serves as the motion vector of the touch operation. For example, if the control unit 13 detects a touch and drag operation of two fingers along a same direction, it may respectively compute motion vectors of the two fingers, and further obtain an average of the two motion vectors to serve as the motion vector of the touch operation (i.e. the touch and drag operation of the two fingers).

Then, the control unit 13 controls the image capturing apparatus 11 to move according to the computed motion vector to capture a current frame (step S206). The control unit 13 may first compute a ratio between a resolution of the touch screen 12 and a resolution of the image capturing apparatus 11, and convert the motion vector of the touch screen 12 into a motion amount of the image capturing apparatus 11 according to the ratio. In this way, the user may have a better and intuitive operation sense to control the movement of the image capturing apparatus 11.

Then, steps of frame compression are performed, by which the control unit 13 divides the captured reference frame into a plurality of reference blocks, and searches a current block in the current frame that corresponds to each of the reference blocks according to the computed motion vector (step S208). In detail, since a motion direction and the motion amount of the image capturing apparatus 11 is determined by a motion direction and a motion amount of the touch operation performed on the touch screen 12, the frames captured by the image capturing apparatus 11 before and after the movement are correlated to the motion vector of the touch operation. Therefore, corresponding blocks in the current frame captured after the movement and in the reference frame captured before the movement are searched according to the motion vector of the touch operation, so as to implement a subsequent motion estimation.

It should be noticed that, in the present embodiment, sizes of the divided reference block and the current block can be a fixed value, for example, a block of 4*4 pixels. In another embodiment, the sizes of the reference block and the current block can also be determined by the resolution of the image capturing apparatus. In brief, if the resolution of the image capturing apparatus is relatively low, a large size reference block (for example, a block of 16*16 pixels) and the current block can be used to estimate a difference between the reference frame and the current frame. Comparatively, if the resolution of the image capturing apparatus is relatively high, a small size reference block (for example, a block of 4*4 pixels) and the current block can be used to estimate the difference between the reference frame and the current frame. When the small size block is used, if a motion vector between a block with a smallest size and an adjacent block is within a threshold (an X-direction motion vector ≦ the threshold, and a Y-direction motion vector ≦ the threshold), the two blocks can be merged into a block of 4*8 pixels or 8*4 pixels, and then further merged with an adjacent block (for example, merged into a block of 8*8 pixels, 8*16 pixels, 16*8 pixels or 16*16 pixels).

After the corresponding reference blocks and the current blocks are searched, the control unit 13 compares a difference between each of the reference blocks and the corresponding current block to determine whether to use the motion vector of the touch operation as a motion vector between the reference block and the current block, and use the determined motion vector to compress frame data of the reference block and the current block (step S210). In detail, when a difference between the current block and the corresponding reference block is smaller than a certain value, it can be determined that the motion of such block is only related to a global movement caused by motion of the image capturing apparatus 11, and is not related to a local movement caused by motion of an object in the block. Therefore, the motion vector of the touch operation can be directly used as the motion vector between the reference block and the current block, so as to save the step of motion estimation.

It should be noticed that regarding the above step of comparing the difference of the reference block and the corresponding current block, the invention provides a simple and quick method, by which by only comparing a difference of specific pixels in the block, it can be determined whether the block is suitable for being compressed by directly using the motion vector of the touch operation. Another embodiment is provided below for detailed descriptions.

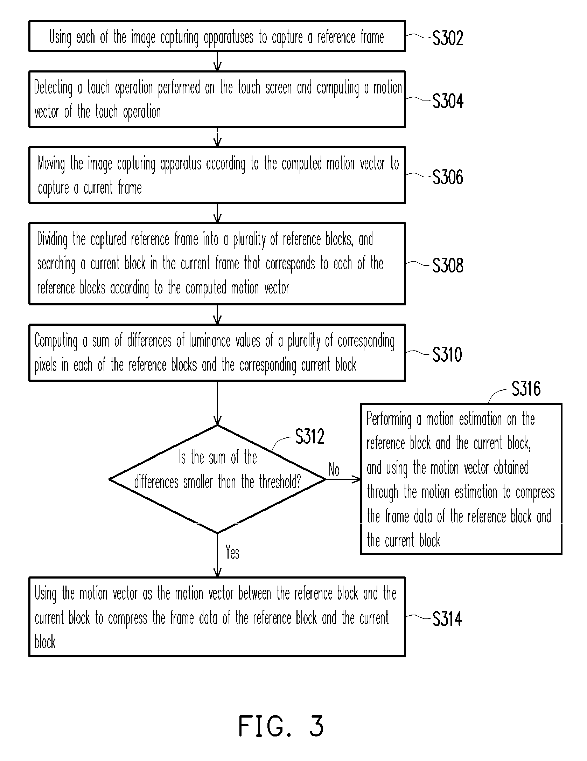

FIG. 3 is a flowchart illustrating a method for assisting video compression by using a touch screen according to an embodiment of the invention. Referring to FIG. 3, the method of the present embodiment is adapted to the monitoring system 10 of FIG. 1, and detailed steps of the method for assisting video compression are described below with reference of various devices of the monitoring system 10.

First, the control unit 13 controls each of the image capturing apparatuses 11 to capture a reference frame (step S302). Then, the control unit 13 detects a touch operation performed on the touch screen 12 and computes a motion vector of the touch operation (step S304), and then the control unit 13 controls the image capturing apparatus 11 to move according to the computed motion vector to capture a current frame (step S306). Then, the control unit 13 divides the captured reference frame into a plurality of reference blocks, and searches a current block in the current frame that corresponds to each of the reference blocks according to the computed motion vector

(step S308). The above steps S302-S308 are the same as or similar to the steps S202-S208 of the aforementioned embodiment, so that details thereof are not repeated.

Different to the aforementioned embodiment, after the current blocks corresponding to the reference blocks are searched, the control unit 13 computes a sum of differences of luminance values of a plurality of corresponding pixels in each of the reference blocks and the corresponding current block (step S310), and then compares the sum of the differences to a threshold to determine whether the sum of the differences is smaller than the threshold (step S312). The control unit 13, for example, obtains luminance values of pixels at four corners of each of the reference blocks and luminance values of pixels at corresponding corners of the current block, so as to compute the sum of the differences.

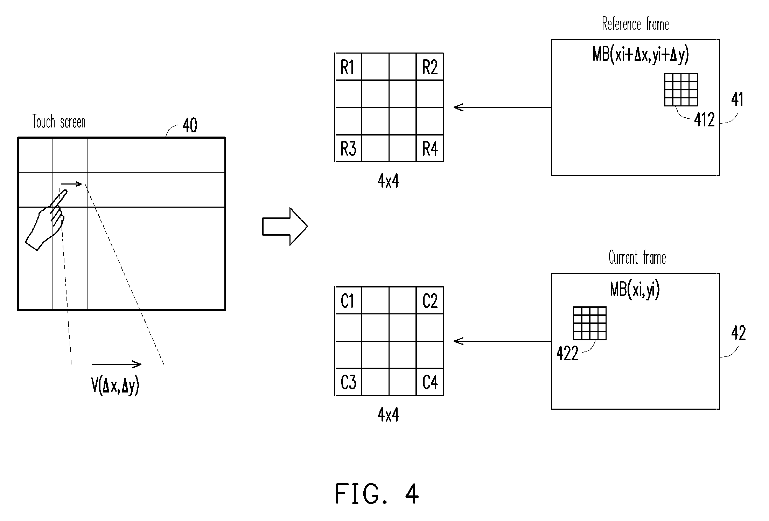

For example, FIG. 4 is an example for computing a difference between the reference block and the corresponding current block according to an embodiment of the invention. Referring to FIG. 4, when the user performs a touch and drag operation from the left to the right on a touch screen 40 through a finger, the monitoring system can compute a motion vector V(Δx, Δy) of such touch and drag operation, which includes an x component Δx and a y component Δy. By moving the image capturing unit according to the motion vector V, a reference frame 41 and a current frame 42 captured before and after the movement are obtained. Now, if a motion vector of a reference block 412 in the reference frame 41 before and after the movement is computed, a position MB(xi, yi) of a current block 422 in the current frame 42 corresponding to a position MB(xi+Δx, yi+Δy) of the reference block 412 can be inversely deduced according to the motion vector V. Then, only luminance values of pixels R1, R2, R3 and R4 at four corners of the reference block 412 and luminance values of the pixels C1, C2, C3 and C4 at the corresponding corners of the current block 422 are compared to compute the sum of the differences of the luminance values of the pixels at the corresponding corners. A purpose of only using the pixels at the four corners is to reduce a computation resource and time required for computing the luminance differences, and if the difference of the corner pixels is not great, it represents that the difference of the whole blocks is not great.

Finally, when the sum of the differences is smaller than the threshold, the motion vector is directly used as the motion vector between the reference block and the current block, and is used to compress the frame data of the reference block and the current block (step S314).

Comparatively, when the sum of the difference is not smaller than the threshold, a motion estimation is performed on the reference block and the current block, and the motion vector obtained through the motion estimation is used to compress the frame data of the reference block and the current block (step S316). In detail, the monitoring system 10, for example, further includes a motion estimator (not shown), which performs a motion estimation between the reference block and the current block when the control unit 13 determines that the sum of the differences is not smaller than the threshold, and provides a motion vector obtained through the motion estimation to the control unit 13, and the control unit 13 uses the motion vector obtained through the motion estimation to compress the frame data of the reference block and the current block.

In summary, in the method for assisting video compression by using the touch screen and the monitoring system, by detecting the touch operation performed on the touch screen, the motion vector of the touch operation is computed and is selectively applied to data compression of the monitored frame, by which a time and a computing amount of computing the motion vector by the motion estimator are greatly reduced.

It will be apparent to those skilled in the art that various modifications and variations can be made to the structure of the invention without departing from the scope of the following claims and their equivalents.

## Claims

1. A method for assisting video compression by using a touch screen (12), adapted to a monitoring system including the touch screen (12) and at least one image capturing apparatus (11), the method comprising:
using (S202) the at least one image capturing apparatus (11) to capture a reference frame (41);
detecting (S204) a touch operation performed on the touch screen (12), and computing a motion vector of the touch operation;
moving (S206) the image capturing apparatus (11) according to the computed motion vector of the touch operation to capture a current frame (42);
dividing (S208) the reference frame (41) into a plurality of reference blocks (412), and determining a current block (422) in the current frame (42) that corresponds to the reference block (412) according to the computed motion vector of the touch operation; and
computing (S210) a sum of differences between luminance values of corresponding specific pixels of the reference block (412) and the corresponding current block (422);
comparing the computed sum of differences to a threshold to determine whether to use the motion vector of the touch operation as a motion vector between the reference block (412) and the current block (422), and
when the computed sum of differences is smaller than the threshold value, directly using (S314) the computed motion vector of the touch operation as the motion vector between the reference block (412) and the current block (422) and using the motion vector of the touch operation to compress frame data of the reference block (412) and the current block (422).

2. The method for assisting video compression by using the touch screen (12) as claimed in claim 1, wherein the method for assisting video compression further comprises:
performing (S316) a motion estimation on the reference block (412) and the current block (422) when the sum of the difference is not smaller than the threshold, and using a motion vector obtained through the motion estimation to compress the frame data of the reference block (412) and the current block (422).

3. The method for assisting video compression by using the touch screen (12) as claimed in claim 2, wherein the step of computing the sum of the differences of the luminance values of the corresponding pixels in each of the reference blocks (412) and the corresponding current block (422) comprises:
obtaining luminance values of pixels at four corners of each of the reference blocks (412) and luminance values of pixels at corresponding corners of the corresponding current block (422), so as to compute the sum of the differences of luminance values.

4. The method for assisting video compression by using the touch screen (12) as claimed in claim 1, wherein the step of detecting the touch operation performed on the touch screen (12) and computing the motion vector of the touch operation comprises:
computing an average of motion vectors of a plurality of touch points of the touch operation to serve as the motion vector of the touch operation.

5. The method for assisting video compression by using the touch screen (12) as claimed in any one of claims 1 to 4, wherein the step of moving the image capturing apparatus (11) according to the computed motion vector of the touch operation to capture the current frame (42) comprises:
computing a ratio between a resolution of the touch screen (12) and a resolution of the image capturing apparatus (11); and
converting the computed motion vector of the touch operation of the touch screen (12) into a motion amount of the image capturing apparatus (11) according to the ratio.

6. The method for assisting video compression by using the touch screen (12) as claimed in any one of claims 1 to 5, wherein the step of dividing the reference frame (41) into a plurality of reference blocks (412) comprises:
determining a size of the divided reference block (412) and the current block (422) according to a resolution of the image capturing apparatus (11).

7. A monitoring system, comprising:
at least one image capturing apparatus (11);
a touch screen (12), detecting a touch operation; and
a control unit (13), coupled to the at least one image capturing apparatus (11) and the touch screen (12), and arranged to compute a motion vector of the touch operation to move the image capturing apparatus (11) to capture a reference frame (41) and a current frame (42),
wherein the control unit (13) is arranged to divide the reference frame (41) into a plurality of reference blocks (412), determine a current block (422) in the current frame (42) that corresponds to the reference block (412) according to the computed motion vector of the touch operation, compute a sum of differences between luminance values of corresponding specific pixels of the reference block (412) and the corresponding current block (422), compare the computed sum of differences to a threshold to determine whether to use the motion vector of the touch operation as a motion vector between the reference block (412) and the current block (422), and, when the control unit determines that the computed sum of differences is smaller than the threshold value, directly use the computed motion vector of the touch operation as the motion vector between the reference block (412) and the current block (422) and use the motion vector of the touch operation to compress frame data of the reference block (412) and the current block (422).

8. The monitoring system as claimed in claim 7, further comprising:
a motion estimator arranged to perform a motion estimation on the reference block (412) and the current block (422) when the control unit (13) determines that the sum of the differences is not smaller than the threshold, and provide a motion vector obtained through the motion estimation to the control unit (13), wherein the control unit (13) is arranged to use the motion vector obtained through the motion estimation to compress the frame data of the reference block (412) and the current block (422).

9. The monitoring system as claimed in claim 7, wherein the control unit (13) is arranged to obtain luminance values of pixels at four corners of each of the reference blocks (412) and luminance values of pixels at corresponding corners of the corresponding current block (422) to compute the sum of the differences of luminance values.

10. The monitoring system as claimed in claim 7, wherein the control unit (13) is arranged to compute an average of motion vectors of a plurality of touch points of the touch operation to serve as the motion vector of the touch operation.

11. The monitoring system as claimed in any one of claims 7 to 10, wherein the control unit (13) is arranged to compute a ratio between a resolution of the touch screen (12) and a resolution of the image capturing apparatus (11), and convert the motion vector of the touch screen (12) into a motion amount of the image capturing apparatus (11) according to the ratio.

12. The monitoring system as claimed in any one of claims 7 to 11, wherein the control unit (13) is arranged to determine a size of the divided reference block (412) and the current block (422) according to a resolution of the image capturing apparatus (11).

## Patentansprüche

1. Verfahren zur Unterstützung einer Videokomprimierung durch Verwenden eines Berührungsbildschirms (12), der für ein Überwachungssystem geeignet ist, welches den Berührungsbildschirm (12) und mindestens eine Bildaufnahmevorrichtung (11) umfasst, wobei das Verfahren Folgendes umfasst:
Verwenden (S202) der mindestens einen Bildaufnahmevorrichtung (11) zum Aufnehmen eines Referenzrahmens (41);
Erfassen (S204) einer Berührungsoperation, die auf dem Berührungsbildschirm (12) durchgeführt wird, und Berechnen eines Bewegungsvektors der Berührungsoperation;
Bewegen (S206) der Bildaufnahmevorrichtung (11) gemäß dem berechneten Bewegungsvektor der Berührungsoperation, um einen aktuellen Rahmen (42) aufzunehmen;
Unterteilen (S208) des Referenzrahmens (41) in mehrere Referenzblöcke (412) und Bestimmen eines aktuellen Blocks (422) in dem aktuellen Rahmen (42), welcher dem Referenzblock (412) gemäß dem berechneten Bewegungsvektor der Berührungsoperation entspricht; und
Berechnen (S210) einer Summe von Differenzen zwischen Luminanzwerten entsprechender spezieller Pixel des Referenzblocks (412) und des entsprechenden aktuellen Blocks (422);
Vergleichen der berechneten Summe von Differenzen mit einem Schwellenwert, um zu bestimmen, ob der Bewegungsvektor der Berührungsoperation als ein Bewegungsvektor zwischen dem Referenzblock (412) und dem aktuellen Block (422) zu verwenden ist, und
wenn die berechnete Summe von Differenzen kleiner als der Schwellenwert ist, direktes Verwenden (S314) des berechneten Bewegungsvektors der Berührungsoperation als Bewegungsvektor zwischen dem Referenzblock (412) und dem aktuellen Block (422) und Verwenden des Bewegungsvektors der Berührungsoperation zum Komprimieren von Rahmendaten des Referenzblocks (412) und des aktuellen Blocks (422).

2. Verfahren zur Unterstützung einer Videokomprimierung durch Verwenden des Berührungsbildschirms (12) nach Anspruch 1, wobei das Verfahren zur Unterstützung der Videokomprimierung ferner umfasst:
Durchführen (S316) einer Bewegungsschätzung an dem Referenzblock (412) und dem aktuellen Block (422), wenn die Summe der Differenzen nicht kleiner als der Schwellenwert ist, und Verwenden eines Bewegungsvektors, der durch die Bewegungsschätzung erhalten wird, zum Komprimieren der Rahmendaten des Referenzblocks (412) und des aktuellen Blocks (422).

3. Verfahren zur Unterstützung einer Videokomprimierung durch Verwenden des Berührungsbildschirms (12) nach Anspruch 2, wobei der Schritt des Berechnens der Summe der Differenzen der Luminanzwerte der entsprechenden Pixel in jedem der Referenzblöcke (412) und dem entsprechenden aktuellen Block (422) umfasst:
Erhalten von Luminanzwerten von Pixeln an vier Ecken jedes der Referenzblöcke (412) und von Luminanzwerten von Pixeln an entsprechenden Ecken des entsprechenden aktuellen Blocks (422), um die Summe der Differenzen von Luminanzwerten zu berechnen.

4. Verfahren zur Unterstützung einer Videokomprimierung durch Verwenden des Berührungsbildschirms (12) nach Anspruch 1, wobei der Schritt des Erfassens der Berührungsoperation, die auf dem Berührungsbildschirm (12) durchgeführt wird, und des Berechnens des Bewegungsvektors der Berührungsoperation umfasst:
Berechnen eines Mittelwerts von Bewegungsvektoren mehrerer Berührungspunkte der Berührungsoperation, der als der Bewegungsvektor der Berührungsoperation dient.

5. Verfahren zur Unterstützung einer Videokomprimierung durch Verwenden des Berührungsbildschirms (12) nach einem der Ansprüche 1 bis 4, wobei der Schritt des Bewegens der Bildaufnahmevorrichtung (11) gemäß dem berechneten Bewegungsvektor der Berührungsoperation zum Aufnehmen des aktuellen Rahmens (42) umfasst:
Berechnen eines Verhältnisses zwischen einer Auflösung des Berührungsbildschirms (12) und einer Auflösung der Bildaufnahmevorrichtung (11) und
Umwandeln des berechneten Bewegungsvektors der Berührungsoperation des Berührungsbildschirms (12) in eine Bewegungsmenge der Bildaufnahmevorrichtung (11) gemäß dem Verhältnis.

6. Verfahren zur Unterstützung einer Videokomprimierung durch Verwenden des Berührungsbildschirms (12) nach einem der Ansprüche 1 bis 5, wobei der Schritt des Unterteilens des Referenzrahmens (41) in mehrere Referenzblöcke (412) umfasst:
Bestimmen einer Größe des unterteilten Referenzblocks (412) und des aktuellen Blocks (422) gemäß einer Auflösung der Bildaufnahmevorrichtung (11).

7. Überwachungssystem, umfassend:
mindestens eine Bildaufnahmevorrichtung (11);
einen Berührungsbildschirm (12), der eine Berührungsoperation erfasst; und
eine Steuerungseinheit (13), die mit der mindestens einen Bildaufnahmevorrichtung (11) und dem Berührungsbildschirm (12) verbunden ist und dafür eingerichtet ist, einen Bewegungsvektor der Berührungsoperation zu berechnen, um die Bildaufnahmevorrichtung (11) zu bewegen, um einen Referenzrahmen (41) und einen aktuellen Rahmen (42) aufzunehmen,
wobei die Steuerungseinheit (13) dafür eingerichtet ist, den Referenzrahmen (41) in mehrere Referenzblöcke (412) zu unterteilen, einen aktuellen Block (422) in dem aktuellen Rahmen (42) zu bestimmen, welcher dem Referenzblock (412) gemäß dem berechneten Bewegungsvektor der Berührungsoperation entspricht, eine Summe von Differenzen zwischen Luminanzwerten entsprechender spezieller Pixel des Referenzblocks (412) und des entsprechenden aktuellen Blocks (422) zu berechnen, die berechnete Summe von Differenzen mit einem Schwellenwert zu vergleichen, um zu bestimmen, ob der Bewegungsvektor der Berührungsoperation als ein Bewegungsvektor zwischen dem Referenzblock (412) und dem aktuellen Block (422) zu verwenden ist, und, wenn die Steuerungseinheit bestimmt, dass die berechnete Summe von Differenzen kleiner als der Schwellenwert ist, direkt den berechneten Bewegungsvektor der Berührungsoperation als Bewegungsvektor zwischen dem Referenzblock (412) und dem aktuellen Block (422) zu verwenden und den Bewegungsvektor der Berührungsoperation zum Komprimieren von Rahmendaten des Referenzblocks (412) und des aktuellen Blocks (422) zu verwenden.

8. Überwachungssystem nach Anspruch 7, ferner umfassend:
einen Bewegungsschätzer, der dafür eingerichtet ist, eine Bewegungsschätzung an dem Referenzblock (412) und dem aktuellen Block (422) durchzuführen, wenn die Steuerungseinheit (13) bestimmt, dass die Summe der Differenzen nicht kleiner als der Schwellenwert ist, und der Steuerungseinheit (13) einen Bewegungsvektor bereitzustellen, der durch die Bewegungsschätzung erhalten wird, wobei die Steuerungseinheit (13) dafür eingerichtet ist, den durch die Bewegungsschätzung erhaltenen Bewegungsvektor zum Komprimieren der Rahmendaten des Referenzblocks (412) und des aktuellen Blocks (422) zu verwenden.

9. Überwachungssystem nach Anspruch 7, wobei die Steuerungseinheit (13) dafür eingerichtet ist, Luminanzwerte von Pixeln an vier Ecken jedes der Referenzblöcke (412) und Luminanzwerte von Pixeln an entsprechenden Ecken des entsprechenden aktuellen Blocks (422) zu erhalten, um die Summe der Differenzen von Luminanzwerten zu berechnen.

10. Überwachungssystem nach Anspruch 7, wobei die Steuerungseinheit (13) dafür eingerichtet ist, einen Mittelwert von Bewegungsvektoren mehrerer Berührungspunkte der Berührungsoperation zu berechnen, der als der Bewegungsvektor der Berührungsoperation dient.

11. Überwachungssystem nach einem der Ansprüche 7 bis 10, wobei die Steuerungseinheit (13) dafür eingerichtet ist, ein Verhältnis zwischen einer Auflösung des Berührungsbildschirms (12) und einer Auflösung der Bildaufnahmevorrichtung (11) zu berechnen und gemäß dem Verhältnis den berechneten Bewegungsvektor der Berührungsoperation des Berührungsbildschirms (12) in eine Bewegungsmenge der Bildaufnahmevorrichtung (11) umzuwandeln.

12. Überwachungssystem nach einem der Ansprüche 7 bis 11, wobei die Steuerungseinheit (13) dafür eingerichtet ist, eine Größe des unterteilten Referenzblocks (412) und des aktuellen Blocks (422) gemäß einer Auflösung der Bildaufnahmevorrichtung (11) zu bestimmen.

## Revendications

1. Procédé d'assistance dans le cadre d'une compression vidéo au moyen d'un écran tactile (12), adapté à un système de surveillance incluant l'écran tactile (12) et au moins un appareil de capture d'image (11), le procédé comprenant les étapes ci-dessous consistant à :
utiliser (S202) ledit au moins un appareil de capture d'image (11) en vue de capturer une trame de référence (41) ;
détecter (S204) une opération tactile mise en oeuvre sur l'écran tactile (12), et calculer un vecteur de mouvement de l'opération tactile ;
déplacer (S206) l'appareil de capture d'image (11) selon le vecteur de mouvement calculé de l'opération tactile en vue de capturer une trame en cours (42) ;
diviser (S208) la trame de référence (41) en une pluralité de blocs de référence (412), et déterminer un bloc en cours (422) dans la trame en cours (42) qui correspond au bloc de référence (412) selon le vecteur de mouvement calculé de l'opération tactile ; et
calculer (S210) une somme de différences entre des valeurs de luminance de pixels spécifiques correspondants du bloc de référence (412) et le bloc en cours correspondant (422) ;
comparer la somme de différences calculée à un seuil en vue de déterminer s'il convient d'utiliser le vecteur de mouvement de l'opération tactile en tant qu'un vecteur de mouvement entre le bloc de référence (412) et le bloc en cours (422) ; et
lorsque la somme de différences calculée est inférieure à la valeur de seuil, utiliser (S314) directement le vecteur de mouvement calculé de l'opération tactile en tant que le vecteur de mouvement entre le bloc de référence (412) et le bloc en cours (422), et utiliser le vecteur de mouvement de l'opération tactile en vue de compresser des données de trame du bloc de référence (412) et du bloc en cours (422).

2. Procédé d'assistance dans le cadre d'une compression vidéo au moyen de l'écran tactile (12) selon la revendication 1, dans lequel le procédé d'assistance dans le cadre d'une compression vidéo comprend en outre les étapes ci-dessous consistant à :
mettre en oeuvre (S316) une estimation de mouvement sur le bloc de référence (412) et le bloc en cours (422) lorsque la somme des différences n'est pas inférieure au seuil, et utiliser un vecteur de mouvement obtenu à travers l'estimation de mouvement en vue de compresser les données de trame du bloc de référence (412) et du bloc en cours (422).

3. Procédé d'assistance dans le cadre d'une compression vidéo au moyen de l'écran tactile (12) selon la revendication 2, dans lequel l'étape de calcul de la somme des différences des valeurs de luminance des pixels correspondants dans chacun des blocs de référence (412) et dans le bloc en cours correspondant (422) comprend l'étape ci-dessous consistant à :
obtenir des valeurs de luminance de pixels à quatre coins de chacun des blocs de référence (412) et des valeurs de luminance de pixels à des coins correspondants du bloc en cours correspondant (422), de manière à calculer la somme des différences de valeurs de luminance.

4. Procédé d'assistance dans le cadre d'une compression vidéo au moyen de l'écran tactile (12) selon la revendication 1, dans lequel l'étape consistant à détecter l'opération tactile mise en oeuvre sur l'écran tactile (12) et à calculer le vecteur de mouvement de l'opération tactile comprend l'étape ci-dessous consistant à :
calculer une moyenne de vecteurs de mouvement d'une pluralité de points tactiles de l'opération tactile destinée à servir de vecteur de mouvement de l'opération tactile.

5. Procédé d'assistance dans le cadre d'une compression vidéo au moyen de l'écran tactile (12) selon l'une quelconque des revendications 1 à 4, dans lequel l'étape consistant à déplacer l'appareil de capture d'image (11) selon le vecteur de mouvement calculé de l'opération tactile en vue de capturer la trame en cours (42) comporte les étapes ci-dessous consistant à :
calculer un rapport entre une résolution de l'écran tactile (12) et une résolution de l'appareil de capture d'image (11) ; et
convertir le vecteur de mouvement calculé de l'opération tactile de l'écran tactile (12) en une quantité de mouvement de l'appareil de capture d'image (11) selon le rapport.

6. Procédé d'assistance dans le cadre d'une compression vidéo au moyen de l'écran tactile (12) selon l'une quelconque des revendications 1 à 5, dans lequel l'étape consistant à diviser la trame de référence (41) en une pluralité de blocs de référence (412) comprend l'étape ci-dessous consistant à :
déterminer une taille du bloc de référence divisé (412) et du bloc en cours (422) selon une résolution de l'appareil de capture d'image (11).

7. Système de surveillance comprenant :
au moins un appareil de capture d'image (11) ;
un écran tactile (12) détectant une opération tactile ; et
une unité de commande (13), couplée audit au moins un appareil de capture d'image (11) et à l'écran tactile (12), et agencée de manière à calculer un vecteur de mouvement de l'opération tactile en vue de déplacer l'appareil de capture d'image (11) afin de capturer une trame de référence (41) et une trame en cours (42) ;
dans lequel l'unité de commande (13) est agencée de manière à diviser la trame de référence (41) en une pluralité de blocs de référence (412), à déterminer un bloc en cours (422) dans la trame en cours (42) qui correspond au bloc de référence (412) selon le vecteur de mouvement calculé de l'opération tactile, à calculer une somme de différences entre des valeurs de luminance de pixels spécifiques correspondants du bloc de référence (412) et le bloc en cours correspondant (422), à comparer la somme de différences calculée à un seuil en vue de déterminer s'il convient d'utiliser le vecteur de mouvement de l'opération tactile en tant qu'un vecteur de mouvement entre le bloc de référence (412) et le bloc en cours (422), et, lorsque l'unité de commande détermine que la somme de différences calculée est inférieure à la valeur de seuil, à utiliser directement le vecteur de mouvement calculé de l'opération tactile en tant que le vecteur de mouvement entre le bloc de référence (412) et le bloc en cours (422), et à utiliser le vecteur de mouvement de l'opération tactile en vue de compresser des données de trame du bloc de référence (412) et du bloc en cours (422).

8. Système de surveillance selon la revendication 7, comprenant en outre :
un estimateur de mouvement agencé de manière à mettre en oeuvre une estimation de mouvement sur le bloc de référence (412) et sur le bloc en cours (422) lorsque l'unité de commande (13) détermine que la somme des différences n'est pas inférieure au seuil, et à fournir un vecteur de mouvement obtenu à travers l'estimation de mouvement à l'unité de commande (13) , dans lequel l'unité de commande (13) est agencée de manière à utiliser le vecteur de mouvement obtenu à travers l'estimation de mouvement en vue de compresser les données de trame du bloc de référence (412) et du bloc en cours (422).

9. Système de surveillance selon la revendication 7, dans lequel l'unité de commande (13) est agencée de manière à obtenir des valeurs de luminance de pixels à quatre coins de chacun des blocs de référence (412) et des valeurs de luminance de pixels à des coins correspondants du bloc en cours correspondant (422), de manière à calculer la somme des différences de valeurs de luminance.

10. Système de surveillance selon la revendication 7, dans lequel l'unité de commande (13) est agencée de manière à calculer une moyenne de vecteurs de mouvement d'une pluralité de points tactiles de l'opération tactile destinée à servir de vecteur de mouvement de l'opération tactile.

11. Système de surveillance selon l'une quelconque des revendications 7 à 10, dans lequel l'unité de commande (13) est agencée de manière à calculer un rapport entre une résolution de l'écran tactile (12) et une résolution de l'appareil de capture d'image (11), et à convertir le vecteur de mouvement de l'écran tactile (12) en une quantité de mouvement de l'appareil de capture d'image (11) selon le rapport.

12. Système de surveillance selon l'une quelconque des revendications 7 à 11, dans lequel l'unité de commande (13) est agencée de manière à déterminer une taille du bloc de référence divisé (412) et du bloc en cours (422) selon une résolution de l'appareil de capture d'image (11).
